# EUROPÄISCHE PATENTSCHRIFT

(11) **EP 2 149 702 B1**
(45) Veröffentlichungstag und Bekanntmachung des Hinweises auf die Patenterteilung: **17.04.2013**
(21) Anmeldenummer: 09008904.6
(22) Anmeldetag: 08.07.2009
(51) Int. Cl.: F03D 11/00

(54) **Rotorwellenlagerung einer Windenergieanlage**
Rotor shaft bearing of a wind turbine
Palier d'arbre de rotor d'une éolienne

(30) Priorität: 02.08.2008 DE 102008036217
(43) Veröffentlichungstag der Anmeldung: 03.02.2010
(73) Patentinhaber: Nordex Energy GmbH, 22848 Norderstedt (DE)
(72) Erfinder: Nitzpon, Joachim, 18209 Steffenshagen (DE); Zähr, Matthias, 22850 Norderstedt (DE); Nickel, Viktor, 22305 Hamburg (DE)
(74) Vertreter: Hauck Patent- und Rechtsanwälte

(56) Entgegenhaltungen:
- WO-A1-2006/000214
- WO-A1-2006/072151
- JP-A- 2007 162 750
- US-A- 3 741 614
- US-A1- 2002 006 241

## Beschreibung

Die vorliegende Erfindung betrifft eine Windenergieanlage mit einem Rotor, der über eine Rotorwelle mit einem Getriebe oder einem Generator verbunden ist. Die Rotorwelle ist über zwei Kegelrollenlager in O-Anordnung vorzugsweise über ein Lagergehäuse an einer Trägereinheit der Windenergieanlage gelagert. Jedes der beiden Kegelrollenlager weist einen Innen- und einen Außenring auf.

Aus DE 103 51 524 ist eine Rotorlagerung für eine Windenergieanlage bekannt. Die Rotorlagerung dient zur Übertragung von Rotorbiege- und -drehmomenten, wobei zwei Kegelrollenlager mit gehäusefestem Außenring und ein nachgeschaltetes Planetengetriebe vorgesehen sind. Die dargestellten Kegelrollenlager sind als Kegelrollenlagerpaar ausgebildet, das einen einstückig ausgebildeten Außenring besitzt. Die Wälzkörper des Kegelrollenlagerpaars sind so angeordnet, dass der rotorseitige Wälzkörper mit einer senkrecht zu seiner Drehachse stehenden Normalenrichtung rotorseitig der Lageranordnung die Rotationsachse des Rotors schneidet, während der getriebeseitige Wälzkörper mit seiner senkrecht zu seiner Drehachse stehenden Normalenrichtung getriebeseitig die Rotationsachse des Rotors schneidet. Derart angeordnete Kegelrollenlager mit drehendem Innenring werden in der Fachsprache als Kegelrollenlager in O-Anordnung bezeichnet. Die Verwendung der Kegelrollenlager in O-Anordnung mit einem einstückig ausgebildeten Außenring erlaubt eine sehr kompakte Bauweise für die Rotorlagerung.

Aus DE 103 92 908 B4 ist eine Windenergieanlage mit einer Kegelrollenlageranordnung bekannt, bei der die Lageranordnung einen ersten bezüglich der Rotorachse drehfest an einer Trägereinheit befestigten und einen zweiten bezüglich der Rotorachse verdrehbaren Lagerring aufweist. Das Lager besitzt drei Reihen von zylindrischen Körpern, wobei eine Reihe stirnseitig und je eine Reihe seitlich des Innenrings angeordnet sind.

Aus WO 2006/000214 A1 ist eine Triebstranglagerung für eine Windenergieanlage bekannt, bei der ein Kegelrollenlagerpaar mit geteiltem Innenring und einstückig ausgebildetem Außenring vorgesehen ist.

Aus WO 2006/072151 A1 ist eine Lageranordnung für eine Ritzelwelle in einem Getriebe bekannt. Gemäß Figur 2 wird eine Lageranordnung für eine Ritzelwelle vorgeschlagen, die zwei Kegelrollenlager in O-Anordnung zeigt, wobei die Ritzelwelle zusätzlich über ein Zylinderrollenlager in dem Getriebegehäuse gelagert ist.

Aus dem Dokument DOE/NASA/203 66-2, NASA TM-82721 mit dem Titel: "Experience and assessment of the DOE-NASA Mod-1 2000-kilowatt wind turbine generator at Boone, North Carolina" ist die Lagerung für eine Rotorwelle einer Windenergieanlage bekannt. Figur 37 aus diesem Dokument zeigt eine Lagerung für eine Rotorwelle einer Windenergieanlage mit zwei Kegelrollenlagern in O-Anordnung. Hierbei ist der Außenring einstückig ausgebildet.

Aus WO 2007/085644 A1 ist eine Lagerung der Rotorwelle für eine Windenergieanlage bekannt, wobei ein nach Art eines Momentenlagers ausgebildetes zweites Rotorlager als ein gegeneinander eingestelltes Kegelrollenlagerpaar in O-Anordnung vorgesehen ist. Das Lagerspiel der Kegelrollenlager wird über eine getriebeseitige Stiftverbindung eingestellt.

Aus DE 102 31 948 A1 ist eine Windenergieanlage mit einer Lageranordnung bekannt, bei der ein erster zur Rotorachse drehfest an einer Trägeranordnung befestigter Lagerring mit einem zweiten zur Rotorachse verdrehbaren und an der Rotornabe befestigten Lagerring zusammenwirkt. Die Lagerringe weisen einen stirnseitig und zwei lateral angeordnete Wälzkörper auf.

Aus JP 2007 162 750 ist eine Lageranordnung für eine Windenergieanlage bekannt geworden, bei der zwei Kegelrollenlager in O-Anordnung an einer Trägereinheit gelagert sind. Die Kegelrollenlager weisen einen Innenring und einen Außenring auf, wobei die Innenringe über eine Hülse in ihrem Abstand in axialer Richtung, bezogen auf die Längsachse der Rotorwelle, zueinander festgelegt sind.

Der Erfindung liegt die Aufgabe zugrunde, eine Windenergieanlage mit einer Lageranordnung für die Rotorwelle bereitzustellen, die eine möglichst einfache Einstellung und Montage des Lagers zulässt.

Erfindungsgemäß wird die Aufgabe durch eine Windenergieanlage gemäß Anspruch 1 und gemäß Anspruch 8 gelöst. Vorteilhafte Ausgestaltungen bilden die Gegenstände der Unteransprüche.

Die erfindungsgemäße Windenergieanlage besitzt einen Rotor, der über eine Rotorwelle mit einem Getriebe und einem Generator verbunden ist. Die Rotorwelle ist über zwei Kegelrollenlager in O-Anordnung an einer Trägereinheit mittelbar oder unmittelbar gelagert. Bei den erfindungsgemäß ausgestalteten Kegelrollenlagern ist jeweils für jedes Kegelrollenlager ein separater Innenring und ein separater Außenring vorgesehen. Erfindungsgemäß sind die Innenringe und die Außenringe der Kegelrollenlager über eine Einstelleinrichtung in ihrem Abstand in axialer Richtung bezogen auf die Rotorwelle zueinander festgelegt. Anders als in der aus dem Stand der Technik bekannten Lösung werden bei der erfindungsgemäßen Lösung zwei Kegelrollenlager mit jeweils separatem Innen- und Außenring eingesetzt, die voneinander beabstandet sind. Das Einstellen des Abstands der beiden Kegelrollenlager erfolgt in einer axialen Richtung, wobei sich die axiale Richtung auf die Rotorwelle bzw. deren Rotationsachse bezieht. Durch die Einstelleinrichtung zwischen den Kegelrollenlagern ist es möglich, diese definiert voneinander zu beabstanden und damit gezielt die Lagervorspannung oder Lagerluft einzustellen, wodurch eine gleichmäßigere Belastung der Lagerlaufbahn erfolgt. Gleichzeitig macht die Einstelleinrichtung es möglich, die Kegelrollenlager bereits bei der Herstellung vor der Montage auf die Rotorwelle über die erfindungsgemäß vorgesehene Einstelleinrichtung auf das gewünschte Maß einzustellen. Hierdurch wird die Montage auf die Rotorwelle deutlich vereinfacht.

Erfindungsgemäß weist die Einstelleinrichtung zwei Hülsen auf, von denen eine erste zwischen den Innenringen und eine zweite zwischen den Außenringen der Kegelrollenlager angeordnet ist. Die Einstelleinrichtung mit zwei Hülsen stellt sicher, dass der für die Lagerung über die Kegelrollenlager notwendige Abstand sowohl zwischen den Innenringen als auch zwischen den Außenringen gewährleistet wird. Dabei ist es möglich, dass die erste Hülse eine von der zweiten Hülse verschiedene Länge aufweist.

Erfindungsgemäß besitzen die Außenringe der Kegelrollenlager auf ihren einander zugewandten Seiten jeweils einen Absatz oder eine Aussparung zum Beispiel in Form einer Nut zur Aufnahme eines stirnseitigen Endes der zweiten Hülse. In einer erfindungsgemäßen Ausführungsform können auch Absatz und Nut vorhanden sein.

In einer weiteren Ausgestaltung der Erfindung weisen die Innenringe der Kegelrollenlager auf ihren einander zugewandten Seiten jeweils einen Absatz oder eine Aussparung zur Aufnahme der ersten Hülse auf. Dies erlaubt, ebenso wie die Absätze in den Außenringen, die Hülsen in eine definierte Position zu bringen. Durch die Absätze in den Lageraußen- bzw. Innenringen der Kegelrollenlager erfolgt eine Zentrierung der Hülsen, so dass der Einstellprozess ebenso wie die Montage der Lager sich vereinfacht.

Da in einer bevorzugten Ausgestaltung der Erfindung die Hülsen hierbei einen kleineren (größeren) Durchmesser als die Lagersitze im Lagergehäuse (auf der Rotorwelle) erhalten können, wird eine Beschädigung der Lagersitze bei der Montage der Hülsen vermieden.

In einer zweckmäßigen Ausgestaltung weist die Rotorwelle Mittel zur Fixierung eines oder beider Kegelrollenlager auf der Rotorwelle auf. Als Mittel zur Fixierung kann beispielsweise eine Schulter auf der Welle vorgesehen sein, die beispielsweise für den Innenring des rotorseitigen Kegelrollenlagers als Anlage dient. Der Innenring des rotorseitigen Kegelrollenlagers liegt hierbei auf seiner zum Rotor weisenden Seite an der Schulter auf der Rotorwelle an. Hierdurch ist die Position des rotorseitigen Kegelrollenlagers rotorseitig definiert. Auch ist es möglich, als Mittel zur Fixierung eine Distanzhülse auf der Rotorwelle vorzusehen, die dann rotorseitig wiederum fixiert ist.

In einer bevorzugten Ausgestaltung sind die Außenringe der Kegelrollenlager über ein Lagergehäuse mit der Trägereinheit verbunden. Das Lagergehäuse ist einstückig ausgebildet und umschließt die Außenringe der Kegelrollenlager.

In einer bevorzugten Ausgestaltung ist rotorseitig und/oder getriebeseitig jeweils ein Lagerdeckel vorgesehen, der mit dem Lagergehäuse verbunden, bevorzugt verschraubt, ist.

Zweckmäßigerweise weist das Lagergehäuse getriebeseitig oder rotorseitig eine Schulter auf, an der der Außenring des getriebeseitigen Kegelrollenlagers auf seiner zum Getriebe weisenden Seite anliegt bzw. der Außenring des rotorseitigen Kegelrollenlagers auf seiner zum Rotor weisenden Seite anliegt. Die Schulter an dem Lagergehäuse dient, wie bereits die Schulter an der Rotorwelle, dazu, die Position des Außenrings des jeweiligen Kegelrollenlagers in axialer Richtung einseitig festzulegen. Auch die Schulter an dem Lagergehäuse kann alternativ durch eine in das Lagergehäuse eingesetzte Distanzhülse oder andere Mittel zur Fixierung des Außenrings in axialer Richtung ersetzt werden.

In einer bevorzugten Ausgestaltung ist der Innenring des getriebeseitigen Kegelrollenlagers auf seiner zum Getriebe weisenden Seite über eine Wellenmutter oder eine andere Vorrichtung zum Aufbringen einer axialen Vorspannkraft in axialer Richtung festgelegt. Durch das Anziehen der Wellenmutter wird der Innenring des getriebeseitigen Kegelrollenlagers positioniert und damit die Anordnung der beiden Kegelrollenlager insgesamt in axialer Richtung eingestellt.

In einer bevorzugten Ausgestaltung ist die Rotorwelle getriebeseitig mit einem Getriebeflansch zur Verbindung der Rotorwelle mit einer Eingangswelle des Getriebes verschraubt. Über den Getriebeflansch wird das Drehmoment aus dem Rotor über die Rotorwelle auf das nachgeordnete Getriebe übertragen.

In einer weiteren bevorzugten Ausgestaltung ist eine Rotorarretierscheibe getriebeseitig der Rotorwelle angeordnet, wobei die Rotorarretierscheibe an dem Innenring des getriebeseitigen Kegelrollenlagers mittelbar oder unmittelbar getriebeseitig anliegt. Bevorzugt besitzt die Rotorarretierscheibe eine Bohrung zur Aufnahme eines am Lagergehäuse integrierten Arretierbolzens. Über die Rotorarretierscheibe kann der Rotor in einer definierten Position festgesetzt werden. Ein solches Festsetzen des Rotors ist beispielsweise für Montage- und Wartungszwecke erstrebenswert.

In einer bevorzugten Weiterbildung weist die Rotorarretierscheibe Mittel zur axialen Lagerfixierung auf, wobei diese beispielsweise aus einer Gewindebohrung in der Rotorarretierscheibe und einer entsprechenden Druckschraube bestehen. Die Druckschraube liegt durch die Gewindebohrung hindurch getriebeseitig an dem Innenring des getriebeseitigen Kegelrollenlagers an. Über die Druckschraube wird in axialer Richtung eine Kraft auf den Innenring des getriebeseitigen Kegelrollenlagers ausgeübt. Über die Druckschraube wird zudem das Kegelrollenlagerpaar eingestellt.

In einer weiteren bevorzugten Ausgestaltung dient die Arretierscheibe gleichzeitig als Mittel zur Übertragung des Drehmoments von der Rotorwelle auf das Getriebe.

Eine Ausgestaltung der erfindungsgemäßen Rotorwellenlagerung für eine Windenergieanlage wird nachfolgend anhand der Figuren näher beschrieben. Die Figuren 5 und 5a zeigen eine erfindungsgemäße Rotorwellenlagerung, die Figuren 1 bis 4, 4a dienen zur näheren Erläuterung.

Es zeigt:
- Fig. 1: einen Querschnitt durch eine Lagerung einer Rotorwelle mit einem rotorseitigen Anschlag auf der Rotorwelle,
- Fig. 1a: eine Detailansicht der Wellenmutter mit einer Wellenhülse,
- Fig. 2: einen Querschnitt durch eine zweite Lagerung der Rotorwelle einer Windenergieanlage mit einem rotorseitigen Anschlag auf der Rotorwelle und einem getriebeseitigen Anschlag am Lagergehäuse,
- Fig. 3: einen Querschnitt durch eine dritte Lagerung der Rotorwelle einer Windenergieanlage mit einer rotorseitigen Distanzhülse auf der Rotorwelle,
- Fig. 3a: eine Detailansicht der rotorseitigen Distanzhülse aus Fig. 3,
- Fig. 4: einen Querschnitt einer vierten Lagerung der Rotorwelle einer Windenergieanlage mit einer getriebeseitigen Arretierscheibe an der Rotorwelle,
- Fig. 4a: eine Detailansicht der Arretierscheibe aus Fig. 4,
- Fig. 5: einen Querschnitt einer erfindungsgemäßen Lagerung der Rotorwelle einer Windenergieanlage, bei der Innenring und Außenring mit einem Absatz zur Aufnahme der inneren und äußeren Hülse versehen sind, und
- Fig. 5a: eine Detailansicht des getriebeseitigen Kegelrollenlagers aus Fig. 5.

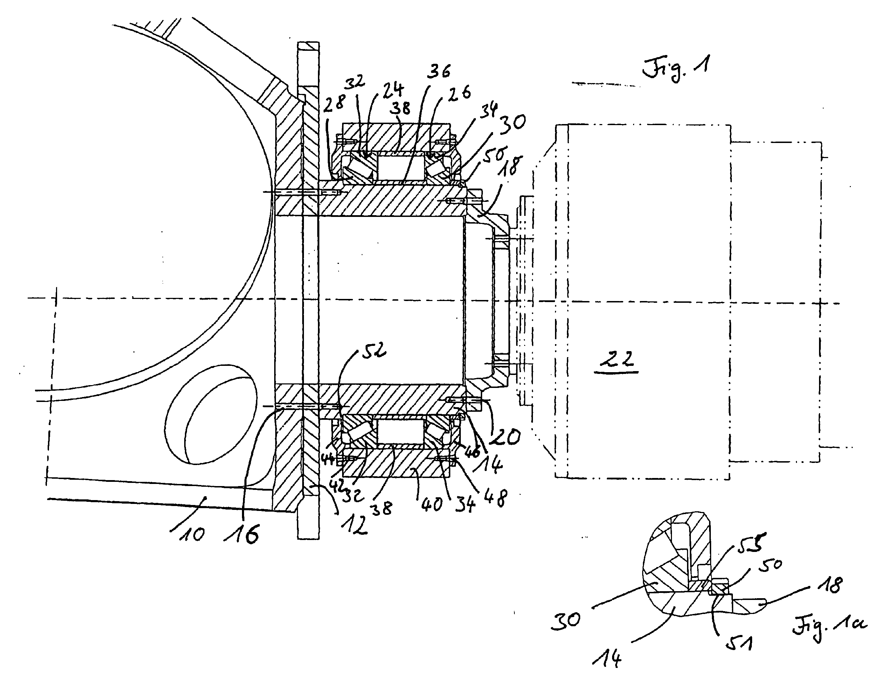

Figur 1 zeigt einen Ausschnitt einer Rotornabe 10, die über eine Arretierscheibe 12 mit einer Rotorwelle 14 verbunden ist, wobei die Arretierscheibe zwischen Rotorwelle und Rotornabe eingeklemmt ist. Die Verbindung erfolgt über Schrauben (nicht dargestellt) in Gewindebohrungen 16, die sich rotorseitig durch die Rotornabe 10 und die Arretierscheibe 12 in die Rotorwelle 14 erstrecken. Auf der gegenüberliegenden Seite der Rotorwelle 14 ist ein Getriebeflansch 18 ebenfalls stirnseitig auf die Rotorwelle 14 über Schrauben 20 (nicht dargestellt) geschraubt. Der Getriebeflansch 18 mündet in einer Eingangswelle eines Getriebes 22. Selbstverständlich kann der Getriebeflansch 18 in Windenergieanlagen, die ohne Getriebe 22 ausgebildet sind, auch direkt in einer Eingangswelle oder in einem Eingangsanschluss eines Generators (nicht dargestellt) münden.

Auf der Rotorwelle 20 sind zwei Kegelrollenlager 24, 26 angeordnet. Das Kegelrollenlager 24 ist dabei das rotorseitige Kegelrollenlager, wobei das Kegelrollenlager 26 als das getriebeseitige Kegelrollenlager angesehen wird. Wie in Figur 1 dargestellt, sind die Innenringe 28, 30 jeweils in axialer Richtung der Rotorwelle versetzt gegenüber den Außenringen 32, 34 angeordnet. In dem in Figur 1 dargestellten Ausführungsbeispiel ist der Innenring 28 des rotorseitigen Kegelrollenlagers in Richtung des Rotors gegenüber dem Außenring 32 versetzt.

Der Innenring 30 des getriebeseitigen Kegelrollenlagers 26 ist zum Getriebe hin gegenüber dem Außenring 34 des getriebeseitigen Kegelrollenlagers versetzt.

Zwischen den Innenringen 28 und 30 der Kegelrollenlager 24 und 26 ist eine erste Hülse 36 eingesetzt. Die erste Hülse 36 liegt an der Rotorwelle 14 an, wobei die Hülse vollständig oder abschnittsweise an der Rotorwelle anliegen kann. Die Hülse 36 definiert den Abstand zwischen den Innenringen 28 und 30. Zwischen den Außenringen 32 und 34 ist eine zweite Hülse 38 angeordnet. Wie in Figur 1 zu erkennen, besitzen die Hülsen 36 und 38 eine unterschiedliche Länge, wobei die Längendifferenz zwischen diesen Hülsen so eingestellt ist, dass Innenring und Außenring die definierte Position zueinander einnehmen. Bei der Herstellung der Lageranordnung werden die Hülsen 36 und 38 auf ca. 1/100 mm maßgenau abgelängt.

Die Außenringe 32, 34 sind von einem Lagergehäuse 40 (vgl. Fig. 1 unten) umschlossen. Das Lagergehäuse 40 besitzt in der in Figur 1 dargestellten Ausführungsform eine Innenfläche an der die Außenseiten der Außenringe 32, 34 anliegen. Die zweite Hülse 38 kann an der Innenfläche anliegen oder alternativ abschnittsweise an der Innenfläche des Lagergehäuses anliegen.

Rotorseitig ist in dem Lagergehäuse eine axiale Bohrung 42 vorgesehen, in die über eine Schraube (nicht dargestellt) ein rotorseitiger Lagerdeckel 44 verschraubt ist. Getriebeseitig ist das Lagergehäuse 40 ebenfalls mit einer Bohrung 48 versehen, über die ein Lagerdeckel 46 mit dem Lagergehäuse 40 verschraubt ist (Schrauben nicht dargestellt). Die Lagerdeckel 44, 46 besitzen auf ihrer zu den Kegelrollenlagern weisenden Innenseite jeweils eine in axialer Richtung vorstehende Schulter, die an den Außenringen der Kegelrollenlager anliegt.

Eine Wellenmutter 50 auf einem am getriebeseitigen Ende der Rotorwelle 14 vorgesehenen Gewindeabschnitt 51 dient dazu, die Lagerinnenringe und die erste Hülse 36 definiert zu verspannen. Die Detailansicht aus Figur 1a zeigt die Wellenmutter 50 aus dem oberen Abschnitt der Figur 1. Fachsprachlich wird der Vorgang des Aufbringens einer definierten Vorspannkraft bezeichnet als: Die Innenringe und die Hülse auf Block ziehen. Wie weiter in der Detailansicht aus Figur 1a zu erkennen, ist zwischen der Wellenmutter 50 und dem Innenring 30 des getriebeseitigen Kegelrollenlagers eine Wellenhülse 55 vorgesehen, die die Vorspannkraft der Wellenmutter 50 überträgt.

Zum besseren Verständnis der Wirkungsweise der Hülsen 36 und 38 sei nachfolgend der Fertigungsablauf kurz erläutert.

In einem ersten Arbeitsschritt wird das rotorseitige Kegelrollenlager mit der Rotorseite nach unten positioniert. Nachfolgend wird die äußere Hülse 38 aufgesetzt. Das getriebeseitige Kegelrollenlager wird nachfolgend auf der äußeren Hülse platziert. Zur Einstellung des Lagers wird dann der getriebeseitige Lagerinnenring mit einer definierten Axialkraft belastet und der Abstand zwischen den beiden Lagerinnenringen gemessen. Ausgehend von dem gemessenen Abstand wird die innere Hülse 36 mit dem benötigten Übermaß zur Einstellung mit Lagerluft oder Untermaß zur Einstellung mit Vorspannung gefertigt. Durch die genaue Fertigung der inneren Hülse sind die Kegelrollenlager nach Aufbringen einer Axialkraft zueinander eingestellt.

Bei der Lagermontage mit den Hülsen 36, 38 erfolgt zunächst eine vertikale Positionierung der Rotorwelle, auf die der Lagerinnenring mit dem Wälzkörpersatz des rotorseitigen Lagers aufgeschoben wird. Nachfolgend wird die Hülse 36 eingesetzt. Anschließend erfolgt die vertikale Positionierung des Lagergehäuses und der Außenring des rotorseitigen Lagers wird eingeschoben. Es wird die äußere Hülse 38 eingesetzt und der Lageraußenring des getriebeseitigen Lagers eingeschoben. Nachfolgend wird das Lagergehäuse auf die Rotorwelle aufgesetzt und der getriebeseitige Lagerinnenring einschließlich Wälzkörpersatz auf die Rotorwelle aufgeschoben. Nachfolgend wird die getriebeseitige Wellenhülse aufgesetzt und durch ein definiertes Anziehen der Wellenmutter bzw. Aufbringen einer definierten Vorspannkraft über eine Einstelleinrichtung die Lagereinheit eingestellt. Abschließend erfolgt die Montage der endseitig vorgesehenen Lagerdeckel.

In Figur 1 besitzt die Rotorwelle 14 an ihrem zum Rotor 10 weisenden Ende eine Schulter 52, an der der Innenring 28 des rotorseitigen Kegelrollenlagers 24 getriebeseitig anliegt. Über die Schulter 52 auf der Rotorwelle 14 in Zusammenwirkung mit der ersten Hülse 36, der Wellenhülse 55 und der Wellenmutter 50 ist die Position der Innenringe 28 und 30 auf der Rotorwelle 14 festgelegt.

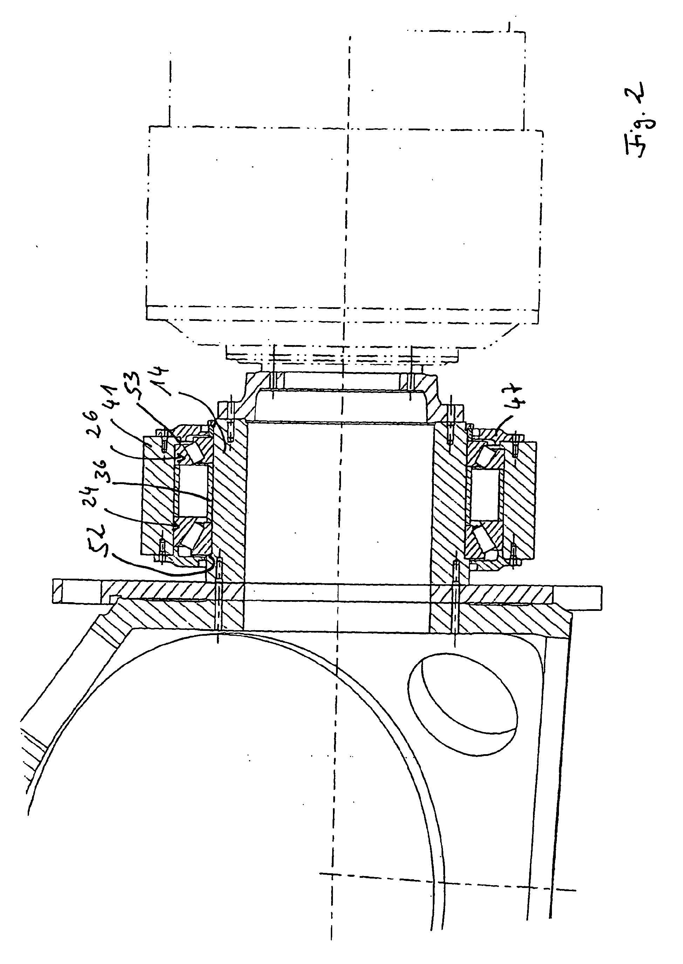

Figur 2 zeigt eine alternative Ausgestaltung der Lagerung. Nachfolgend werden gleiche Bauteile mit gleichen Bezugszeichen versehen. Bei den Kegelrollenlagern 24 und 26 auf der Rotorwelle 14 liegt der Innenring des rotorseitigen Kegelrollenlagers 24 wieder getriebeseitig an einer Schulter 52 der Rotorwelle 14 an. Im Unterschied zu der Ausführungsform aus Figur 1 besitzt das Lagergehäuse 41 getriebeseitig eine Schulter 53, an der der Außenring des getriebeseitigen Kegelrollenlagers 26 rotorseitig anliegt. Auf diese Weise wird zusätzlich die Position des Außenrings des getriebeseitigen Lagers festgelegt. Ein weiterer Unterschied gegenüber der Ausgestaltung aus Figur 1 besteht darin, dass der getriebeseitige Lagerdeckel 47 nicht an dem Außenring 34 anliegt, sondern von diesem in axialer Richtung beabstandet ist. Auch bei der in Figur 2 dargestellten Anordnung der zwei Kegelrollenlager 24 und 26 kann deren Position zueinander vor der Montage auf die Rotorwelle 14 eingestellt werden, indem die Hülsen 36 und 38 vorher passgenau aufeinander abgestimmt werden, damit die Innenringe und die Außenringe den vorgesehenen Abstand voneinander besitzen.

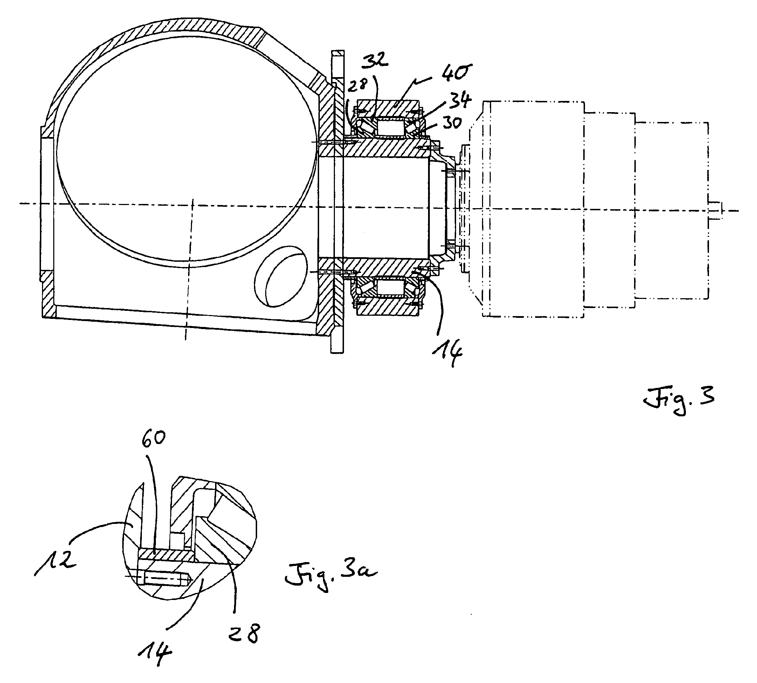

Figur 3 zeigt eine weitere Ausgestaltung der Rotorlagerung. In dieser Ausgestaltung werden gleiche Bauteile zu den früheren Ausgestaltungen wieder mit gleichen Bezugszeichen versehen. Das Lagergehäuse 40 in der dritten Ausgestaltung besitzt anders als die Ausgestaltung aus Figur 2 keine Schulter am rotorseitigen Ende. Vielmehr liegen die Außenringe 34 und 32 der Kegelrollenlager auf einem Abschnitt der Innenfläche des Lagergehäuses 40 an. Der Bereich der Innenfläche des Lagergehäuses zwischen den Außenringen 32 und 34 kann hierbei eine Vertiefung aufweisen, ebenso wie der Bereich auf der Rotorwelle 14 zwischen den Innenringen 28, 30. Eine Besonderheit der Ausgestaltung gemäß Figur 3 ist in Figur 3a dargestellt. Hier ist eine Distanzhülse 60 auf die Rotorwelle 14 aufgesetzt. Die Distanzhülse 60 kann rotorseitig von der Arretierscheibe 12, der Rotornabe direkt oder einem anderen umlaufenden Bauteil in rotorseitiger Richtung axial fixiert werden. Getriebeseitig stützt die Distanzhülse 60 den Innenring 28 des rotorseitigen Kegelrollenlagers ab. Die Distanzhülse 60 erfüllt somit die gleiche Aufgabe wie die Schulter 52 gemäß den Ausgestaltungen aus Figuren 1 und 2 und vermeidet es zudem, dass die Rotorwelle 17 einen größeren Durchmesser in Form einer Wellenschulter und damit einen Steifigkeitssprung erhält.

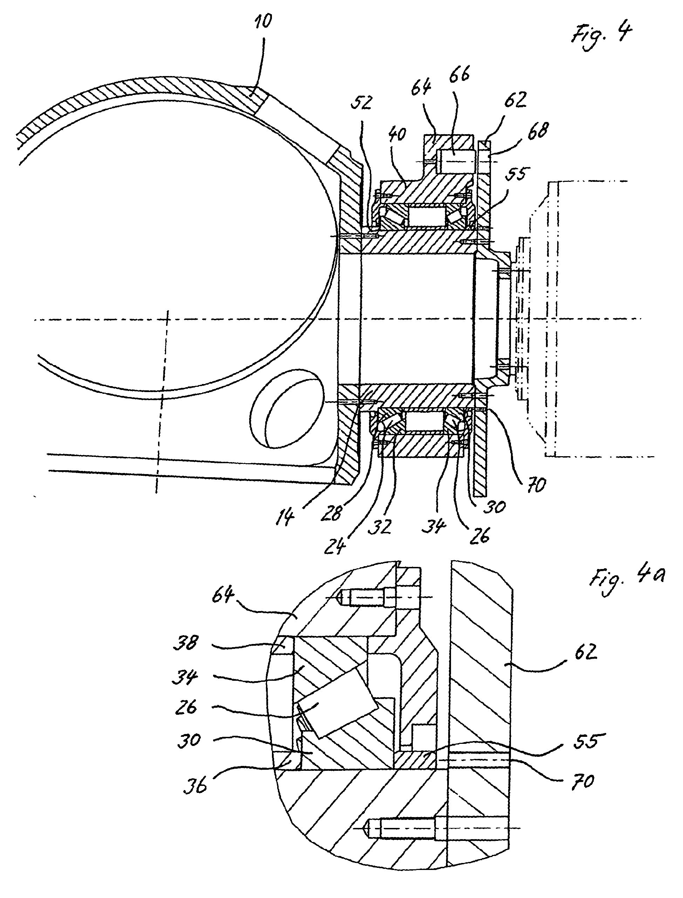

Die Figuren 4 und 4a zeigen ein weiteres Beispiel der Lagerung, bei dem wieder gleiche Bauteile mit gleichen Bezugszeichen versehen sind. Die Kegelrollenlager 24 und 26 sind am rotorseitigen bzw. getriebeseitigen Ende der Rotorwelle 14 angeordnet. Das rotorseitige Kegelrollenlager 24 liegt mit seinem Innenring 28 rotorseitig an einer Wellenschulter 52 an. Das getriebeseitige Kegelrollenlager 26 liegt mit seinem

Innenring 30 getriebeseitig an einer Wellenhülse 55 an. Zwischen den Innenringen 30 und 28 der Kegelrollenlager befindet sich die Hülse 36.

Die Außenringe 32 und 34 der Kegelrollenlager sind innerhalb des Lagergehäuses 40 angeordnet. Zwischen den Außenringen 32 und 34 ist die Hülse 38 angeordnet, die ebenfalls an dem Lagergehäuse 40 anliegt. An dem Lagergehäuse 40 ist eine Rotorarretiereinheit 64 vorgesehen, die einen Arretierbolzen 66 aufweist, über den die Rotorwelle und der Rotor relativ zur Rotorarretierscheibe 62 festgelegt werden kann. Hierzu wird der Bolzen 66 vorgeschoben, so dass er in eine Bohrung 68 in der Rotorarretierscheibe 62 eingreift.

Die Rotorarretierscheibe 62 besitzt eine Gewindebohrung 70, durch die eine Druckschraube (nicht dargestellt) eingeschraubt werden kann, um eine definierte Kraft auf den Innenring 30 des getriebeseitigen Kegelrollenlagers 26 aufzubringen und dieses gleichzeitig in seiner axialen Position zu fixieren.

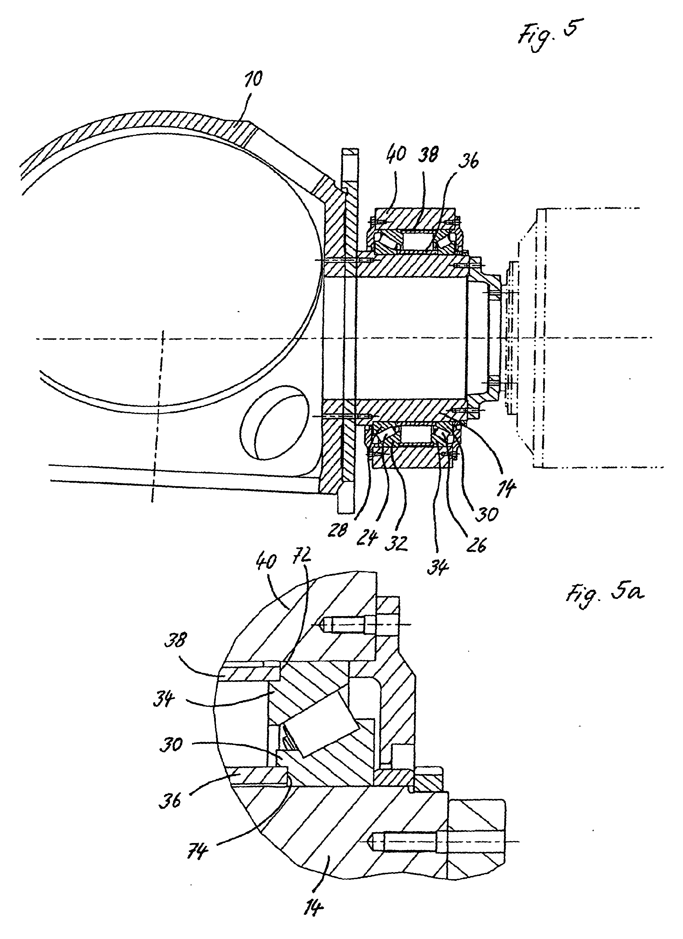

Die Figuren 5 und 5a zeigen ein Ausführungsbeispiel der erfindungsgemäßen Lagerung, bei dem die Innenseite der Außenringe 32 und 34 jeweils mit einem Absatz 72 versehen ist. Die zweite Hülse 38 liegt zwischen den Außenringen 32 und 34 jeweils in den Absätzen 72 an. Ebenso sind die Innenringe 28, 30 der Kegelrollenlager mit Absätzen 74 versehen, an denen die erste Hülse 36 anliegt.

Alternativ zu den in den Figuren 5 und 5a dargestellten, auf das Lagerpaar bezogen innenliegenden Absätzen 72 und 74 der Innen- und Außenringe können die Absätze 72, 74 die Hülsen 36, 38 bezogen auf das Lagerpaar auch außenliegend umschließen oder anders geformte Aussparungen zur Aufnahme der Hülsen 36, 38 vorgesehen sein, wenn diese an die Geometrie der Hülsen angepasst sind.

Bei der Einstellung der Kegelrollenlager erfolgt durch die Absätze 72, 74 eine Zentrierung der Hülsen 36, 38, die die Montage deutlich vereinfacht.

## Patentansprüche

1. Windenergieanlage mit einem Rotor, der über eine Rotorwelle (14) mit einem Getriebe (22) und/oder einem Generator verbunden ist, wobei die Rotorwelle (14) über zwei Kegelrollenlager (24, 26) in O-Anordnung an einer Trägereinheit gelagert ist, jedes Kegelrollenlager (24, 26) einen Innen- und einen Außenring aufweist, die Innenringe (28, 30) und die Außenringe (32, 34) über zwei Hülsen (36, 38) in ihrem Abstand in axialer Richtung bezogen auf die Rotationsachse der Rotorwelle (14) zueinander festgelegt sind, von denen eine erste Hülse (36) zwischen den Innenringen (28, 30) und eine zweite Hülse (38) zwischen den Außenringen (32, 34) der Kegelrollenlager (24, 26) angeordnet ist, wobei die Außenringe (32, 34) auf ihren einander zugewandten Seiten jeweils einen Absatz (72) oder eine Aussparung zur Aufnahme eines stirnseitigen Endes der zweiten Hülse (38) aufweisen.

2. Windenergieanlage nach Anspruch 1, **dadurch gekennzeichnet, dass** die Außenringe (32, 34) der Kegelrollenlager (24, 26) über ein Lagergehäuse (40, 41) mit der Trägereinheit verbunden sind.

3. Windenergieanlage nach Anspruch 2, **dadurch gekennzeichnet, dass** die zweite Hülse (38) einen kleineren Durchmesser als die Lagersitze im Lagergehäuse aufweist.

4. Windenergieanlage nach einem der Ansprüche 1 bis 3, **dadurch gekennzeichnet, dass** die Aussparung zur Aufnahme eines stirnseitigen Endes der zweiten Hülse (38) in den einander zugewandten Seiten der Außenringe (32, 34) eine Nut ist.

5. Windenergieanlage nach einem der Ansprüche 1 bis 3, **dadurch gekennzeichnet, dass** die Absätze (72) der Außenringe (32, 34) auf das Lagerpaar der zwei Kegelrollenlager (24, 26) bezogen innenliegend angeordnet sind.

6. Windenergieanlage nach einem der Ansprüche 1 bis 3, **dadurch gekennzeichnet, dass** die Absätze (72) der Außenringe (32, 34) bezogen auf das Lagerpaar der zwei Kegelrollenlager (24, 26) außenliegend angeordnet sind und die zweite Hülse (38) umschließen.

7. Windenergieanlage nach einem der Ansprüche 1 bis 6, **dadurch gekennzeichnet, dass** die Innenringe (28, 30) auf ihren einander zugewandten Seiten jeweils einen Absatz (74) oder eine Aussparung zur Aufnahme der ersten Hülse (36) aufweisen.

8. Windenergieanlage mit einem Rotor, der über eine Rotorwelle (14) mit einem Getriebe (22) und/oder einem Generator verbunden ist, wobei die Rotorwelle (14) über zwei Kegelrollenlager (24, 26) in O-Anordnung an einer Trägereinheit gelagert ist, jedes Kegelrollenlager (24, 26) einen Innen- und einen Außenring aufweist, wobei die Innenringe (28, 30) und die Außenringe (32, 34) über zwei Hülsen (36, 38) in ihrem Abstand in axialer Richtung bezogen auf die Rotationsachse der Rotorwelle (14) zueinander festgelegt sind, von denen eine erste Hülse (36) zwischen den Innenringen (28, 30) und eine zweite Hülse (38) zwischen den Außenringen (32, 34) der Kegelrollenlager (24, 26) angeordnet ist, wobei die Innenringe (28, 30) auf ihren einander zugewandten Seiten jeweils einen Absatz (74) oder eine Aussparung zur Aufnahme der ersten Hülse (36) aufweisen.

9. Windenergieanlage nach Anspruch 8, **dadurch gekennzeichnet, dass** die erste Hülse (36) einen größeren Durchmesser als die Lagersitze auf der Rotorwelle aufweist.

10. Windenergieanlage nach Anspruch 8 oder 9, **dadurch gekennzeichnet, dass** die Absätze (74) der Innenringe (28, 30) auf das Lagerpaar der zwei Kegelrollenlager (24, 26) bezogen innenliegend angeordnet sind.

11. Windenergieanlage nach Anspruch 8 oder 9, **dadurch gekennzeichnet, dass** die Absätze (74) der Innenringe (28, 30) bezogen auf das Lagerpaar der zwei Kegelrollenlager (24, 26) außenliegend sind und die erste Hülse (36) umschließen.

12. Windenergieanlage nach einem der Ansprüche 9 bis 11, **dadurch gekennzeichnet, dass** die Außenringe (32, 34) auf ihren einander zugewandten Seiten jeweils einen Absatz (72) oder eine Aussparung zur Aufnahme eines stirnseitigen Endes der zweiten Hülse (38) aufweisen.

13. Windenergieanlage nach einem der Ansprüche 8 bis 12, **dadurch gekennzeichnet, dass** die Außenringe (32, 34) der Kegelrollenlager (24, 26) über ein Lagergehäuse (40, 41) mit der Trägereinheit verbunden sind.

14. Windenergieanlage nach einem der Ansprüche 2 bis 7 oder 13, **dadurch gekennzeichnet, dass** rotorseitig und/oder getriebeseitig ein Lagerdeckel (44, 46, 47) vorgesehen ist, der mit dem Lagergehäuse (40, 41) verbunden ist.

15. Windenergieanlage nach einem der Ansprüche 2 bis 7, 13 oder 14, **dadurch gekennzeichnet, dass** das Lagergehäuse getriebeseitig oder rotorseitig eine Schulter (53) aufweist, an der der Außenring (34) des getriebeseitigen Kegelrollenlagers (26) auf seiner zum Getriebe weisenden Seite bzw. der Außenring (32) des rotorseitigen Kegelrollenlagers (24) auf seiner zum Rotor weisenden Seite anliegt.

16. Windenergieanlage nach einem der Ansprüche 1 bis 15, **dadurch gekennzeichnet, dass** der Innenring (30) des getriebeseitigen Kegelrollenlagers auf seiner zum Getriebe weisenden Seite über Mittel zum Aufbringen einer axialen Vorspannkraft in axialer Richtung festgelegt ist.

17. Windenergieanlage nach Anspruch 16, **dadurch gekennzeichnet, dass** als Mittel zum Aufbringen einer axialen Vorspannkraft eine Wellenmutter (50) vorgesehen ist.

18. Windenergieanlage nach Anspruch 17, **dadurch gekennzeichnet, dass** die Wellenmutter (50) auf einem Gewindeabschnitt (51) am getriebeseitigen Ende der Rotorwelle verschraubt ist.

19. Windenergieanlage nach einem der Ansprüche 1 bis 18, **dadurch gekennzeichnet, dass** eine Rotorarretierscheibe (62) getriebeseitig der Rotorwelle (14) angeordnet ist, wobei die Rotorarretierscheibe (62) an dem Innenring (30) des getriebeseitigen Kegelrollenlagers (26) mittelbar oder unmittelbar getriebeseitig anliegt.

20. Windenergieanlage nach Anspruch 19, **dadurch gekennzeichnet, dass** die Rotorarretierscheibe (62) Mittel zur axialen Lagerfixierung aufweist.

## Claims

1. A wind turbine comprising a rotor, which is connected to a transmission (22) and/or a generator via a rotor shaft (14), wherein the rotor shaft (14) is mounted on a support module via two taper roller bearings (24, 26) in an O arrangement, wherein each taper roller bearing (24, 26) comprises an inner and an outer race, the inner races (28, 30) and the outer races (32, 34) being fixed in their distance to each other in the axial direction with respect to the rotation axis of the rotor shaft (14) via two sleeves (36, 38), of which a first sleeve (36) is arranged between the inner races (28, 30) and a second sleeve (38) is arranged between the outer races (32, 34) of the taper roller bearings (24, 26) ,wherein the outer races (32, 34) comprise on their sides facing to each other a projection (72) or a recess for receiving a front side end of the second sleeve (38).

2. A wind turbine according to claim 1, **characterised in that** the outer races (32, 34) of the taper roller bearings (24, 26) are connected to the support module via a bearing housing (40; 41).

3. A wind turbine according to claim 2, **characterized in that** the second sleeve (38) has a smaller diameter than the bearing seats in the bearing housing.

4. A wind turbine according to one of the claims 1 to 3, **characterized in that** the recess for receiving a front side end of the second sleeve (38) on the sides of the outer races (32, 34) facing to each other is a groove.

5. A wind turbine according to one of the claims 1 to 3, **characterized in that** the projections (72) of the outer races (32, 34) are arranged inside with respect to the bearing pair of the two taper roller bearings (24, 26).

6. A wind turbine according to one of the claims 1 to 3, **characterized in that** the projections (72) of the outer races (32, 34) are arranged outside with respect to the bearing pair of the two taper roller bearings (24, 26) and enclose the second sleeve (38).

7. A wind turbine according to one of the claims 1 to 6, **characterized in that** the inner races (28, 30) comprise on their sides facing to each other a projection (74) or a recess for receiving the first sleeve (36),

8. A wind turbine comprising a rotor which is connected to a transmission (22) and/or a generator via a rotor shaft (14), wherein the rotor shaft (14) is mounted on a support module via two taper roller bearings (24, 26) in an O-arrangement, wherein each taper roller bearing (24, 26) comprises an inner and an outer race, wherein the inner races (28, 30) and the outer races (32, 34) are fixed in their distance to each other in axial direction with respect to the rotation axis of the rotor shaft (14) via two sleeves (36, 38), of which a first sleeve (36) is arranged between the inner races (28, 30) and a second sleeve (38) is arranged between the outer races (32, 34) of the taper roller bearings (24, 26), wherein the inner races (28, 30) comprise on their sides facing to each other a projection (74) or a recess for receiving the first sleeve (36).

9. A wind turbine according to claim 8, **characterized in that** the first sleeve (36) has a larger diameter than the bearing seats on the rotor shaft.

10. A wind turbine according to claim 8 or 9, **characterized in that** the projections (74) of the inner races (28, 30) are arranged inside with respect to the bearing pair of the two taper roller bearings (24, 26).

11. A wind turbine according to claim 8 or 9, **characterized in that** the projections (74) of the inner races (28, 30) are arranged outside with respect to the bearing pair of the two taper roller bearings (24, 26) and enclose the first sleeve (36).

12. A wind turbine according to one of the claims 9 to 11, **characterized in that** the outer races (32, 34) comprise on their sides facing to each other a projection (72) or a recess for receiving the front side end of the second sleeve (38).

13. A wind turbine according to one of the claims 8 to 12, **characterized in that** the outer races (33, 34) of the taper roller bearings (24, 26) are connected to the support module via a bearing housing (40, 41).

14. A wind turbine according to one of the claims 2 to 7 or 13, **characterized in that** a bearing cover (44, 46, 47) is provided on the rotor side and/or the transmission side, wherein the bearing cover is connected to the bearing housing (40, 41).

15. A wind turbine according to one of claims 2 to 7, 13 or 14, **characterized in that** the bearing housing has a shoulder (53) on the transmission side or on the rotor side, against which the outer race (34) of the taper roller bearing (26) on the transmission side abuts at its side facing to the transmission or the outer race (32) of the taper roller bearing (24) on the rotor side abuts at its side facing to the rotor, respectively.

16. A wind turbine according to one of claims 1 to 15, **characterized in that** the inner race (30) of the taper roller bearing on the transmission side is fixed in the axial direction on its side facing to the transmission via means for applying an axial prestressing force.

17. A wind turbine according to claim 16, **characterized in that** a shaft nut (50) is provided as the means for applying an axial prestressing force.

18. A wind turbine according to claim 17, **characterized in that** the shaft nut (50) is screwed onto a thread section (51) at the end of the rotor shaft on the transmission side.

19. A wind turbine according to one of claims 1 to 18, **characterized in that** a rotor lock disc (62) is arranged after the rotor shaft (14) in the direction of the transmission, wherein the rotor lock disc (62) abuts indirectly or directly against the inner race (30) of the taper roller bearing (26) on the transmission side on the transmission side of the inner race (30).

20. A wind turbine according to claim 19, **characterized in that** the rotor lock disc (62) has means for fixing the bearings axially.

## Revendications

1. Éolienne muni d'un rotor qui est connecté par un arbre de rotor (14) à une transmission (22) et/ou un générateur, l'arbre de rotor (14) étant attaché sur une unité de support via deux roulements à rouleaux coniques (24, 26) dans une disposition en O, chaque roulement à rouleaux coniques (24, 26) comportant une bague intérieure et une bague extérieure, les bagues intérieures (28, 30) et les bagues extérieures (32, 34) sont fixées entre elles par deux manchons (36, 38) dans leur distance dans la direction axiale par référence à l'axe de rotation de l'arbre de rotor (14), dont un premier manchon (36) est agencé entre les bagues intérieures (28, 30) et un second manchon (38) est agencé entre les bagues extérieures (32, 34) des roulements à rouleaux coniques (24, 26), les bagues extérieures (32, 34) comportant sur leurs faces orientant l'une sur l'autre un épaulement (72) ou un évidement pour la attachement d'une extrémité côté frontal du second manchon (38).

2. Éolienne selon la revendication 1, **caractérisée en ce que** les bagues extérieures (32, 34) des roulements à rouleaux coniques (24, 26) sont connectées par un logement de roulement (40, 41) à l'unité de support.

3. Éolienne selon la revendication 2, **caractérisée en ce que** le second manchon (38) comporte un diamètre inférieur à celui des chaises de roulement dans le logement de roulement.

4. Éolienne selon une des revendications 1 à 3, **caractérisée en ce que** l'évidement pour la attachement d'une extrémité côté frontal du second manchon (38) dans les faces orientant l'une sur l'autre des bagues extérieures (32, 34) est une rainure.

5. Éolienne selon une des revendications 1 à 3, **caractérisée en ce que** les épaulements (72) des bagues extérieures (32, 34) par référence à la paire de roulements des deux roulements à rouleaux coniques (24, 26) sont agencés rentrés.

6. Éolienne selon une des revendications 1 à 3, **caractérisée en ce que** les épaulements (72) des bagues extérieures (32, 34) par référence à la paire de roulements des deux roulements à rouleaux coniques (24, 26) sont agencés en saillie et entourent le second manchon (38).

7. Éolienne selon une des revendications 1 à 6, **caractérisée en ce que** les bagues intérieures (28, 30) sur leurs faces orientant l'une sur l'autre comportant respectivement un épaulement (74) ou un évidement pour la attachement du premier manchon (36).

8. Éolienne muni d'un rotor qui est connecté par un arbre de rotor (14) à une transmission (22) et/ou un générateur, l'arbre de rotor (14) étant attaché sur une unité de support via deux roulements à rouleaux coniques (24, 26) dans une disposition en O, chaque roulement à rouleaux coniques (24, 26) compartant une bague intérieure et une bague extérieure, les bagues intérieures (28, 30) et les bagues extérieures (32, 34) étant fixées entre elles par deux manchons (36, 38) dans leur distance dans la direction axiale par référence à l'axe de rotation de l'arbre de rotor (14), dont un premier manchon (36) est agencé entre les bagues intérieures (28, 30) et un second manchon (38) est agencé entre les bagues extérieures (32, 34) des roulements à rouleaux coniques (24, 26), les bagues intérieures (28, 30) comportant sur leurs faces orientant l'une sur l'autre un épaulement (74) ou un évidement pour la attachement du premier manchon (36).

9. Éolienne selon la revendication 8, **caractérisée en ce que** le premier manchon (36) comporte un diamètre supérieur à celui des chaises de roulement sur l'arbre de rotor.

10. Éolienne selon les revendications 8 ou 9, **caractérisée en ce que** les épaulements (74) des bagues intérieures (28, 30) par référence à la paire de roulements des deux roulements à rouleaux coniques (24, 26) sont agencés rentrés.

11. Éolienne selon les revendications 8 ou 9, **caractérisée en ce que** les épaulements (74) des bagues intérieures (28, 30) par référence à la paire de roulements des deux roulements à rouleaux coniques (24, 26) sont agencés en saillie et entourent le premier manchon (36).

12. Éolienne selon une des revendications 9 à 11, **caractérisée en ce que** les bagues extérieures (32, 34) sur leurs faces orientant l'une sur l'autre comportant respectivement un épaulement (72) ou un évidement pour la attachement d'une extrémité côté frontal du second manchon (38).

13. Éolienne selon une des revendications 8 à 12, **caractérisée en ce que** les bagues extérieures (32, 34) des roulements à rouleaux coniques (24, 26) sont connectées par un logement de roulement (40, 41) à l'unité de support.

14. Éolienne selon une des revendications 2 à 7 ou 13, **caractérisée en ce que** côté rotor et/ou côté transmission est prévu un chapeau de roulement (44, 46, 47) qui est connecté au logement de roulement (40, 41).

15. Éolienne selon une des revendications 2 à 7, 13 ou 14, **caractérisée en ce que** le logement de roulement côté transmission ou côté rotor comporte un épaulement (53) contre lequel s'appuie la bague extérieure (34) du roulement à rouleaux coniques (26) côté transmission sur sa face dirigée vers la transmission et/ou la bague extérieure (32) du roulement à rouleaux coniques (24) côté rotor sur sa face dirigée vers le rotor.

16. Éolienne selon une des revendications 1 à 15, **caractérisée en ce que** la bague intérieure (30) du roulement à rouleaux coniques côté transmission sur sa face dirigée vers la transmission est fixée dans la direction axiale par des moyens d'application d'une force de précontrainte axiale.

17. Éolienne selon la revendication 16, **caractérisée en ce qu'**un écrou d'arbre (50) est prévu comme moyen d'application d'une force de précontrainte axiale.

18. Éolienne selon la revendication 17, **caractérisée en ce que** l'écrou d'arbre (50) est vissé sur un segment fileté (51) à l'extrémité côté transmission de l'arbre de rotor.

19. Éolienne selon une des revendications 1 à 18, **caractérisée en ce qu'**un disque d'arrêt de rotor (62) est agencé côté transmission de l'arbre de rotor (14), le disque d'arrêt de rotor (62) s'appuyant directement ou indirectement côté transmission contre la bague intérieure (30) du roulement à rouleaux coniques (26) côté transmission.

20. Éolienne selon la revendication 19, **caractérisée en ce que** le disque d'arrêt de rotor (62) comporte des moyens de fixation axiale de roulement.
